# EUROPEAN PATENT APPLICATION

(11) **EP 4 744 982 A1**
(43) Date of publication of application: **20.05.2026**
(21) Application number: 25207692.2
(22) Date of filing: 09.10.2025
(51) Int. Cl.: B60T 13/16, B60T 13/68, B66F 9/00

(54) **HYDRAULIC BRAKE SYSTEM FOR INDUSTRIAL VEHICLE**

(30) Priority: 05.11.2024 JP 2024193807
(71) Applicant: KABUSHIKI KAISHA TOYOTA JIDOSHOKKI, Kariya-shi, Aichi 448-8671 (JP)
(72) Inventor: MASUDA, Hideo, Kariya-shi, 448-8671 (JP)
(74) Representative: TBK

(57) **Abstract**

A hydraulic brake system (10) for an industrial vehicle includes: a brake device (13) configured to brake a wheel; a master cylinder (12); and a master cylinder fluid passage (17, 33, 18) connecting the master cylinder (12) and the brake device (13). The hydraulic brake system (10) includes: an actuator (15); a control valve (14); an actuator fluid passage (21, 35)that extends from the actuator (15) to the master cylinder fluid passage (17, 33, 18); a first solenoid valve (34) configured to open and close the master cylinder fluid passage (17, 33, 18); a second solenoid valve (36) configured to open and close the actuator fluid passage (21, 35); a controller (28) configured to control the first solenoid valve (34) and the second solenoid valve (36); and a detection sensor (94, 95) connected to the controller (28) and configured to detect whether a braking force is required. When the detection sensor detects that the braking force is required, the controller (28) controls so that the actuator (15) is activated, the first solenoid valve (34) closes, and the second solenoid valve (36) opens.

## Description

The present invention relates to a hydraulic brake system for an industrial vehicle.

### BACKGROUND ART

As a conventional technique relating to a hydraulic brake system for an industrial vehicle, for example, a brake fluid pressure control device disclosed in Japanese Patent Application Publication No. 2000-085560 has been known. The brake fluid pressure control device disclosed in Japanese Patent Application Publication No. 2000-085560 includes a control piston that receives fluid pressure generated by a master cylinder, a control valve that controls the fluid pressure of a fluid pressure source with respect to the fluid pressure acting on the control piston, and a brake device that operates with the fluid pressure controlled by the control valve.

The hydraulic brake system disclosed in the Publication is known. In order to enable automated operation without an operator in an industrial vehicle configured to be capable of manual operation, it is necessary to provide a means for automatedly generating braking force in a brake device that is configured to generate braking force through brake pedal operation. That is, in an industrial vehicle configured to switch between the manual operation and the automated operation, it is necessary to implement a hydraulic brake system that can apply braking force to the brake device both through the brake pedal operation and through automatic control of an actuator. In this case, for example, it is considered that the actuator, which is an automatedly controlled, is configured to press the brake pedal during automated operation, but the actuator would interfere with brake pedal operation during the manual operation. In addition, it is difficult to adjust the braking force of the brake device when the actuator operates the brake pedal.

The present invention, which has been made in view of the above problems, is directed to providing a hydraulic brake system for an industrial vehicle that can properly operate a brake device when operation of the industrial vehicle is switched between manual operation and automated operation.

### SUMMARY

In accordance with an aspect of the present invention, there is provided a hydraulic brake system for an industrial vehicle. The hydraulic brake system includes: a brake device configured to brake a wheel using hydraulic pressure; a brake pedal; a master cylinder configured to discharge hydraulic fluid in accordance with a depressed amount of the brake pedal to output the hydraulic pressure; and a master cylinder fluid passage connecting the master cylinder and the brake device. The hydraulic brake system includes: an actuator configured to output the hydraulic pressure; a control valve disposed in the master cylinder fluid passage; an actuator fluid passage that extends from the actuator to the master cylinder fluid passage through the control valve; a first solenoid valve provided in the control valve and configured to open and close the master cylinder fluid passage; a second solenoid valve provided in the control valve and configured to open and close the actuator fluid passage; a controller configured to control the first solenoid valve and the second solenoid valve; and a detection sensor connected to the controller and configured to detect whether a braking force is required. When the detection sensor detects that the braking force is required, the controller controls so that the actuator is activated, the first solenoid valve closes, and the second solenoid valve opens.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the embodiments together with the accompanying drawings in which:
FIG. 1 is a schematic configuration view of a hydraulic brake system for a forklift truck according to an embodiment of the present invention;
FIG. 2A is a schematic view of a first solenoid valve, and FIG. 2B is a schematic view of a second solenoid valve;
FIG. 3A is a schematic view of a first check valve, and FIG. 3B is a schematic view of a second check valve;
FIG. 4 is a schematic configuration view of the hydraulic brake system, illustrating a state in which a braking force is generated by a master cylinder;
FIG. 5 is a graph showing a relationship between time and each of hydraulic pressure in the master cylinder and opening degrees of the first solenoid valve, the second solenoid valve, the first check valve, and the second check valve;
FIG. 6 is a schematic configuration view of the hydraulic brake system, illustrating a state in which the second solenoid valve is opened by operation of an actuator;
FIG. 7 is a graph showing a relationship between the time and each of the hydraulic pressure in the actuator and the opening degrees of the first solenoid valve, the second solenoid valve, the first check valve, and the second check valve;
FIG. 8 is a graph showing a relationship between the time and each of the hydraulic pressure in the master cylinder, the hydraulic pressure in the actuator, and the opening degrees of the first solenoid valve, the second solenoid valve, the first check valve, and the second check valve when a brake pedal is depressed while a braking force is generated by the actuator;
FIG. 9 is a graph showing a relationship between operation of an electric motor, the time, and each of hydraulic pressure in a brake device and the opening degrees of the first solenoid valve, the second solenoid valve, the first check valve, and the second check valve when braking pressure in the brake device is maintained while the braking force is generated by the actuator; and

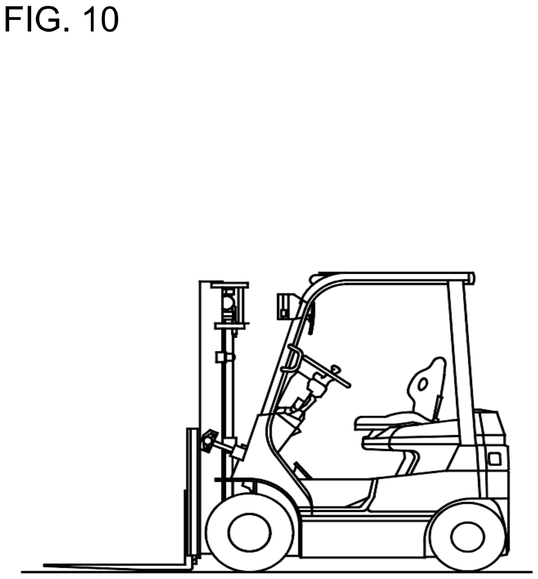

FIG. 10 is a schematic view of a forklift truck.

### DETAILED DESCRIPTION OF THE EMBODIMENTS

The following will describe a hydraulic brake system for an industrial vehicle according to an embodiment of the present invention with reference to the accompanying drawings. The industrial vehicle of the present embodiment is a forklift truck, and the hydraulic brake system for the forklift truck will be described.

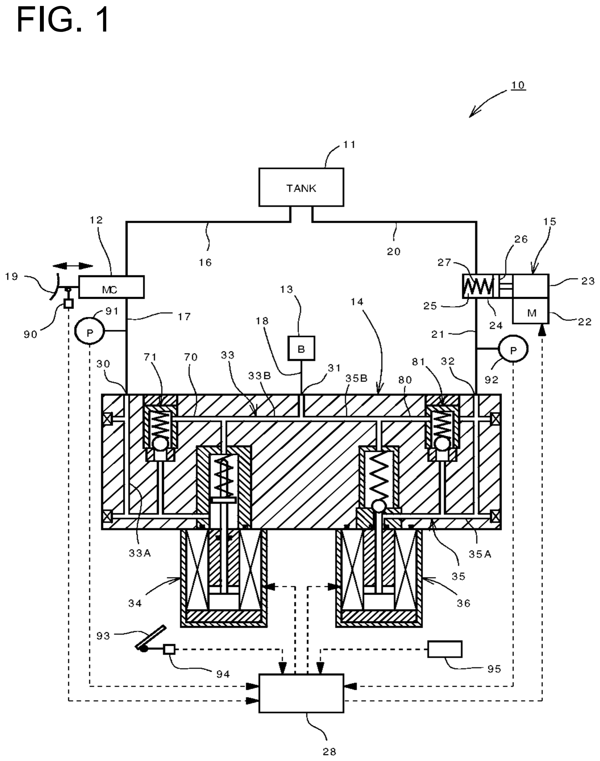

As illustrated in FIG. 1, a hydraulic brake system 10 of a forklift truck (hereinafter referred to as "hydraulic brake system") includes a hydraulic fluid tank 11, a master cylinder 12, a brake device 13, a control valve 14, an actuator 15, and a brake pedal 19. The hydraulic fluid tank 11 is a tank in which hydraulic fluid is stored. The master cylinder 12 is connected to the hydraulic fluid tank 11 by a pipe 16 and also to the control valve 14 by a pipe 17. The control valve 14 is connected to the brake device 13 by a pipe 18.

The master cylinder 12 is configured to output hydraulic pressure in accordance with a depressed amount of the brake pedal 19. When the forklift truck is operated manually (manual operation), the master cylinder 12 outputs the hydraulic pressure to the brake device 13 via the control valve 14 in response to the operation of the brake pedal 19 by an operator, thereby generating a braking force in the brake device 13.

The brake device 13 is configured to brake a wheel (not illustrated) using the hydraulic pressure. That is, in the brake device 13, the braking force, which stops rotation of wheels of the forklift truck, is generated depending on the hydraulic pressure output by the master cylinder 12 or the actuator 15. The brake device 13 of the forklift truck is, for example, a wet brake provided on a front axle of a vehicle body, but may also be a drum brake or a disc brake.

The actuator 15 is connected to the hydraulic fluid tank 11 by a pipe 20 and also to the control valve 14 by a pipe 21. The actuator 15 mechanically outputs the hydraulic fluid to generate the hydraulic pressure. The actuator 15 of the present embodiment is an electric hydraulic air cylinder, and includes an electric motor 22, a conversion mechanism 23 that converts the rotation of the electric motor 22 into linear motion, a cylinder 24 with a fluid chamber 25, and a piston 26 reciprocally movable inside the cylinder 24. The fluid chamber 25 accommodates a coil spring 27 as an urging member that returns the piston 26 to its original position. The piston 26 moves forward with the forward rotation of the electric motor 22 and retracts with the reverse rotation of the electric motor 22. In the actuator 15, when the piston 26 is driven forward by the electric motor 22, the hydraulic fluid in the fluid chamber 25 is pressurized and discharged. The electric motor 22 is electrically connected to and controlled by a controller 28. Although not illustrated, the controller 28 includes a central processing unit (CPU) that performs various processing operations, and a memory unit that stores programs and data, controls various components of the forklift truck, and receives signals from various sensors.

The control valve 14 has a master cylinder port 30 to which the pipe 17 is connected, a brake port 31 to which the pipe 18 is connected, and an actuator port 32 to which the pipe 21 is connected. The master cylinder port 30, the brake port 31, and the actuator port 32 are formed in the upper portion of the control valve 14 in order to facilitate removal of air (air bubbles) contained in the hydraulic fluid.

The control valve 14 has a first passage 33 that provides fluid communication between the master cylinder port 30 and the brake port 31. A first solenoid valve 34 is provided in the control valve 14 and disposed in the first passage 33. The first solenoid valve 34 is configured to open and close the first passage 33. The first passage 33 has a passage portion 33A that provides fluid communication between the master cylinder port 30 and the first solenoid valve 34, and a passage portion 33B that provides fluid communication between the first solenoid valve 34 and the brake port 31.

The control valve 14 has a second passage 35 that provides fluid communication between the actuator port 32 and the first passage 33. A second solenoid valve 36 is provided in the control valve 14 and disposed in the second passage 35. The second solenoid valve 36 is configured to open and close the second passage 35. The second passage 35 is connected to the passage portion 33B of the first passage 33. The second passage 35 has a passage portion 35A that provides fluid communication between the actuator port 32 and the second solenoid valve 36, and a passage portion 35B that provides fluid communication between the second solenoid valve 36 and the passage portion 33B. The first solenoid valve 34 and the second solenoid valve 36 are controlled by the controller 28.

In the hydraulic brake system 10 of the present embodiment, the pipe 17, the first passage 33, and the pipe 18 cooperate to form a master cylinder fluid passage that connects the master cylinder 12 and the brake device 13. In addition, in the hydraulic brake system 10, the pipe 21 and the second passage 35 cooperate to form an actuator fluid passage that extends from the actuator 15 to the master cylinder fluid passage through the control valve 14.

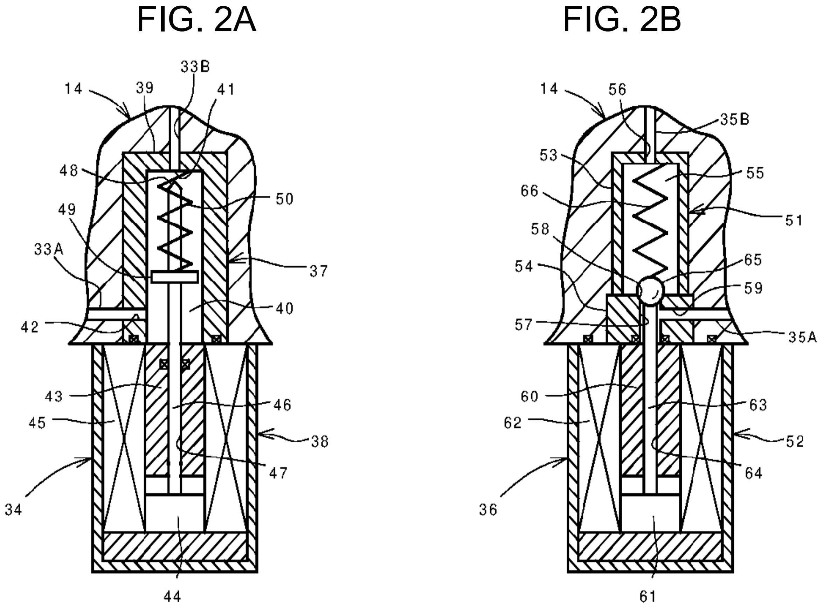

The first solenoid valve 34 is a normally open solenoid valve that closes the first passage 33 when energized, and opens the first passage 33 when not energized. As illustrated in FIG. 2A, the first solenoid valve 34 includes a valve portion 37 embedded in a lower portion of the control valve 14, and a solenoid portion 38 connected to the valve portion 37 and protruding from the lower portion of the control valve 14. The valve portion 37 includes a valve housing 39 having a tubular shape. The valve housing 39 has a valve chamber 40. A valve hole 41 is formed in the upper portion of the valve housing 39, and a communication hole 42 in communication with the passage portion 33A is formed in the side portion of the valve housing 39. The valve hole 41 is in communication with the passage portion 33B. The valve chamber 40, the valve hole 41, and the communication hole 42 form a part of the first passage 33.

The solenoid portion 38 includes a fixed iron core 43, a movable iron core 44, and an electromagnetic coil 45. A rod insertion hole 47 through which a rod 46 is inserted is formed in the center of the fixed iron core 43. One (lower) end of the rod 46 is connected to the movable iron core 44. The movable iron core 44 is movable in an axial direction of the rod 46. The electromagnetic coil 45 surrounds the fixed iron core 43 and the movable iron core 44. When the electromagnetic coil 45 is energized, the movable iron core 44 approaches the fixed iron core 43, thereby moving the rod 46 upward. A valve element 48 is provided on the other (upper) end of the rod 46. The valve element 48 is capable of closing the valve hole 41. The valve element 48 has a conical shape whose outer diameter decreases toward the tip. The rod 46 is provided with a spring receiver 49. In the valve chamber 40, a coil spring 50 corresponding to an urging member is interposed between the spring receiver 49 and the valve housing 39. The coil spring 50 applies an urging force (spring force) to the rod 46 in a direction that urges the rod 46 to open the valve hole 41. The urging force (spring force) exerted by the coil spring 50 is calculated as the product of the spring constant and the displacement from its natural length.

The second solenoid valve 36 is a normally closed solenoid valve that opens the second passage 35 when energized, and closes the second passage 35 when not energized. As illustrated in FIG. 2B, the second solenoid valve 36 includes a valve portion 51 embedded in the lower portion of the control valve 14, and a solenoid portion 52 connected to the valve portion 51 and protruding from the lower portion of the control valve 14. The valve portion 51 includes a valve housing 53 having a tubular shape, and a valve body 54. The valve housing 53 and the valve body 54 form a valve chamber 55. A communication hole 56 in communication with the passage portion 35B of the second passage 35 is formed in the upper portion of the valve housing 53.

A through hole 57 is formed in the center of the valve body 54 so as to be in communication with the valve chamber 55. A valve hole 58 is formed on the valve chamber 55 side of the through hole 57. An inner diameter of a surface forming the valve hole 58 increases from the through hole 57 toward an opening of the valve hole 58. The valve body 54 has a communication hole 59 that provides fluid communication between the through hole 57 and the passage portion 35A. The valve chamber 55, the through hole 57, the valve hole 58, and the communication hole 59 form a part of the second passage 35.

The solenoid portion 52 includes a fixed iron core 60, a movable iron core 61, and an electromagnetic coil 62. A rod insertion hole 64 through which a rod 63 is inserted is formed in the center of the fixed iron core 60. One (lower) end of the rod 63 is connected to the movable iron core 61. The movable iron core 61 is movable in an axial direction of the rod 63. The electromagnetic coil 62 surrounds the fixed iron core 60 and the movable iron core 61. When the electromagnetic coil 62 is energized, the movable iron core 61 approaches the fixed iron core 60, thereby moving the rod 63 upward. A valve element 65 is provided on the other (upper) end of the rod 63. The valve element 65 is capable of closing the valve hole 58. The valve element 65 has a spherical shape, but it is not limited to a spherical shape and may be a conical shape, for example. The valve chamber 55 accommodates a coil spring 66 as an urging member that applies an urging force (spring force) to the valve element 65. The urging force (spring force) exerted by the coil spring 66 is calculated as the product of the spring constant and the displacement from its natural length.

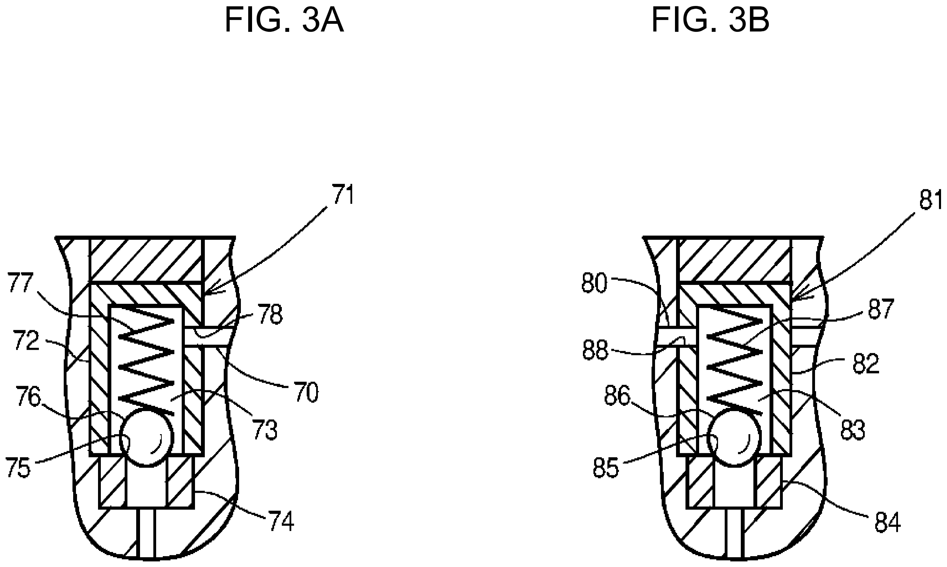

The control valve 14 has a first bypass passage 70 that branches from the passage portion 33A, bypasses the first solenoid valve 34, and is connected to the passage portion 33B, and the first check valve 71 disposed in the first bypass passage 70. As illustrated in FIG. 3A, the first check valve 71 includes a housing 72 having a valve chamber 73, a valve member 74 having a valve hole 75, and a valve element 76 and a coil spring 77 accommodated in the valve chamber 73. The housing 72 has a communication hole 78 that is in communication with the valve chamber 73. The valve element 76 has a spherical shape, and receives an urging force (spring force) from the coil spring 77 so as to close the valve hole 75. A diameter of the valve hole 75 is sufficiently greater than a diameter of the valve hole 41 of the first solenoid valve 34, for example, about three times greater than the diameter of the valve hole 41. The diameter of the valve hole 75 is not limited to about three times the diameter of the valve hole 41, but may be about one to five times the diameter of the valve hole 41.

In the first check valve 71, when the hydraulic pressure increases at the end of the first bypass passage 70 adjacent to the valve hole 75, the valve element 76 opens the valve hole 75 against the urging force (spring force) of the coil spring 77, so that the hydraulic fluid is supplied toward the brake device 13 from the master cylinder 12. The first check valve 71 allows the hydraulic fluid to flow through the first bypass passage 70 toward the brake device 13 when braking is initiated, but does not allow the hydraulic fluid to flow from the brake device 13, where the hydraulic pressure of braking is generated, toward the master cylinder 12.

The urging force (spring force) exerted by the coil spring 77 of the first check valve 71 is calculated as the product of the spring constant and the displacement from its natural length. The spring force of the coil spring 77 is sufficiently smaller than the spring force of the coil spring 50 of the first solenoid valve 34, thereby allowing the valve hole 75 to be opened by sufficiently low hydraulic pressure. The first check valve 71 is designed by combining a large orifice diameter with a small spring force so as to reduce the valve opening pressure of the first check valve 71. The valve opening pressure of the first check valve 71 is almost equal to the valve opening pressure of the second check valve 81, which will be described later. The valve opening pressure of the first check valve 71 while no hydraulic pressure for braking is generated in the brake device 13 is calculated by dividing the spring force of the coil spring 77 by an area of the valve hole 75. The valve opening pressure of the first check valve 71 when the fluid pressure for braking is generated in the brake device 13 is calculated by adding the hydraulic pressure of the brake device 13 to the hydraulic pressure which is calculated by dividing the spring force of the coil spring 77 by the area of the valve hole 75.

The control valve 14 has a second bypass passage 80 that branches from the passage portion 35A, bypasses the second solenoid valve 36, and is connected to the passage portion 35B, and the second check valve 81 disposed in the second bypass passage 80. As illustrated in FIG. 3B, the second check valve 81 includes a housing 82 having a valve chamber 83, a valve member 84 having a valve hole 85, and a valve element 86 and a coil spring 87 accommodated in the valve chamber 83. The housing 82 has a communication hole 88 that is in communication with the valve chamber 73. The valve element 86 has a spherical shape, and receives an urging force (spring force) from the coil spring 87 so as to close the valve hole 85. A diameter of the valve hole 85 is sufficiently greater than a diameter of the valve hole 58 of the second solenoid valve 36, for example, about three times greater than the diameter of the valve hole 58. The diameter of the valve hole 85 is not limited to about three times the diameter of the valve hole 58, but may be about one to five times the diameter of the valve hole 58.

In the second check valve 81, when the hydraulic pressure increases at the end of the second bypass passage 80 adjacent to the valve hole 85, the valve element 86 opens the valve hole 85 against the urging force (spring force) of the coil spring 87, so that the hydraulic fluid is supplied toward the brake device 13 from the actuator 15. The second check valve 81 allows the hydraulic fluid to flow through the second bypass passage 80 toward the brake device 13 when braking is initiated, but does not allow the hydraulic fluid to flow from the brake device 13, where the hydraulic pressure of braking is generated, toward the actuator 15.

The urging force (spring force) exerted by the coil spring 87 of the second check valve 81 is calculated as the product of the spring constant and the displacement from its natural length. The spring force of the coil spring 87 is smaller than the spring force of the coil spring 66 of the second solenoid valve 36, thereby allowing the valve hole 85 to be opened by sufficiently low hydraulic pressure. The valve opening pressure of the second check valve 81 is 0.05 to 10.0% of the valve opening pressure of the second solenoid valve 36, preferably 0.06 to 5.0%, more preferably 0.07 to 1.0%. The second check valve 81 is designed by combining a large orifice diameter with a small spring force so that the valve opening pressure of the second check valve 81 is less than the valve opening pressure of the second solenoid valve 36 The valve opening pressure of the second check valve 81 while no hydraulic pressure for braking is generated in the brake device 13 is calculated by dividing the spring force of the coil spring 87 by an area of the valve hole 85. The valve opening pressure of the second check valve 81 when no fluid pressure for braking is generated in the brake device 13 is calculated by adding the hydraulic pressure of the brake device 13 to the hydraulic pressure which is calculated by dividing the spring force of the coil spring 87 by the area of the valve hole 85. The valve opening pressure of the second solenoid valve 36 when no hydraulic pressure for braking is generated in the brake device 13 is calculated by dividing the spring force of the coil spring 66 by an area of the valve hole 58. The valve opening pressure of the second solenoid valve 36 when fluid pressure for braking is generated in the brake device 13 is calculated by adding the hydraulic pressure of the brake device 13 to the hydraulic pressure which is calculated by dividing the spring force of the coil spring 66 by the area of the valve hole 58. When the hydraulic fluid is supplied from the actuator 15 to the second passage 35 and the hydraulic pressure increases in the passage portion 35A of the second passage 35, the second check valve 81 is controlled by the controller 28 so that the second check valve 81 is opened before the second solenoid valve 36 is opened, thereby allowing the hydraulic fluid to be supplied to the brake device 13. The first check valve 71 and the second check valve 81 are arranged in the control valve 14 so that their opening directions correspond to the up-down direction in order to prevent air contained in the hydraulic fluid from accumulating in the valve chamber 73 and the valve chamber 83.

The hydraulic brake system 10 of the present embodiment includes a limit switch 90. The limit switch 90 serves as a brake pedal sensor configured to detect depression of the brake pedal 19. When the limit switch 90 detects that the brake pedal 19 is depressed, the limit switch 90 transmits a signal to the controller 28. A first hydraulic pressure sensor 91 that detects the hydraulic pressure in the pipe 17 is disposed in the pipe 17. The first hydraulic pressure sensor 91 transmits a signal indicating the detected hydraulic pressure to the controller 28. A second hydraulic pressure sensor 92 that detects the hydraulic pressure in the pipe 21 is disposed in the pipe 21. The second hydraulic pressure sensor 92 transmits a signal indicating the detected hydraulic pressure to the controller 28. The controller 28 simultaneously issues an operation command to the actuator 15 and a valve opening command to the second solenoid valve 36. The controller 28 feeds back the hydraulic pressure in the pipe 21, detected by the second hydraulic pressure sensor 92, to the electric motor 22 of the actuator 15. Based on this feedback, the controller 28 controls the torque of the electric motor 22 such that the hydraulic pressure in the pipe 21 reaches a target pressure.

The hydraulic brake system 10 of the present embodiment includes an accelerator pedal 93, an accelerator pedal sensor 94 that detects depression of the accelerator pedal 93, and an obstacle sensor 95. The accelerator pedal 93 is depressed by the operator when the forklift truck is operated manually (manual operation), or automatically depressed when the forklift truck is operating without the operator in the forklift truck. The vehicle speed of the forklift truck varies depending on the depressed amount of the accelerator pedal 93. The accelerator pedal sensor 94 detects whether the accelerator pedal 93 is depressed, and transmits a detection signal to the controller 28. The obstacle sensor 95 is a sensor that detects an obstacle that may interfere with traveling of the forklift truck, and transmits a signal to the controller 28 when such an obstacle is detected. The accelerator pedal sensor 94 and the obstacle sensor 95 serve as the detection sensor of the present invention that is configured to detect whether the braking force is required (i.e., a situation requiring the braking of the wheels of the forklift truck) when the forklift truck is traveling and causes the controller 28 to recognize it.

Next, the operation of the hydraulic brake system 10 according to the present embodiment will be described. Firstly, braking during the manual operation of the forklift truck will be described. When the forklift truck is operated manually by the operator, a braking force is not generated in the brake device 13 unless the operator operates the brake pedal 19. In the case where braking of the forklift truck is performed during the manual operation, the operator depresses the brake pedal 19, which causes the master cylinder 12 to discharge the hydraulic fluid in accordance with the depressed amount of the brake pedal 19, thereby causing the braking force to be generated in the brake device 13. Thus, in the case of braking during the manual operation, the first solenoid valve 34 opens the first passage 33 and the second solenoid valve 36 closes the second passage 35.

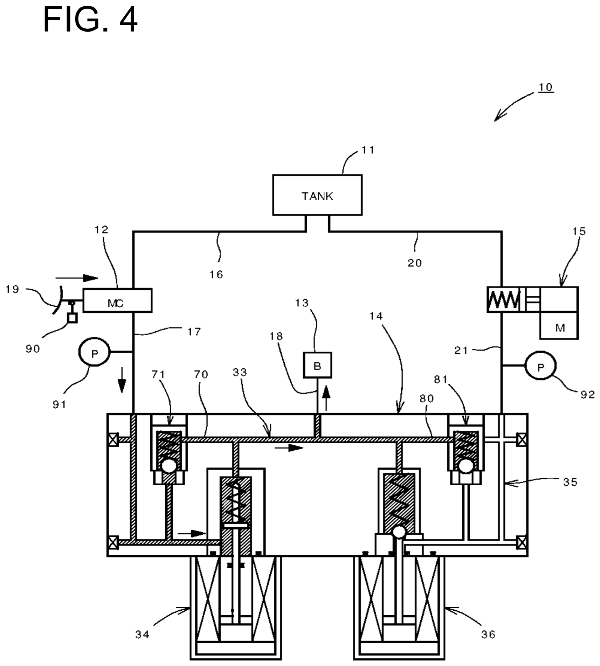

When the brake pedal 19 is depressed, the hydraulic pressure in the pipe 17 increases to a threshold value or greater. The controller 28 receives the signal indicating the depressed amount of the brake pedal 19 from the limit switch 90 and the signal indicating the hydraulic pressure in the pipe 17 from the first hydraulic pressure sensor 91. This allows the controller 28 to detect that the hydraulic fluid is discharged from the master cylinder 12. The first solenoid valve 34 is a normally open solenoid valve and the second solenoid valve 36 is a normally closed solenoid valve. Accordingly, the controller 28 does not control the first solenoid valve 34 and the second solenoid valve 36. As illustrated in FIG. 4, although the controller 28 does not control the first solenoid valve 34 and the second solenoid valve 36, the hydraulic fluid discharged from the master cylinder 12 is supplied to the brake device 13 through the pipe 17, the first passage 33, and the pipe 18. The hatched section in FIG. 4 indicates the hydraulic fluid in the control valve 14. In the brake device 13, a braking force is generated by the hydraulic fluid supplied from the master cylinder 12, and the forklift truck is decelerated or stopped by the braking force in the brake device 13.

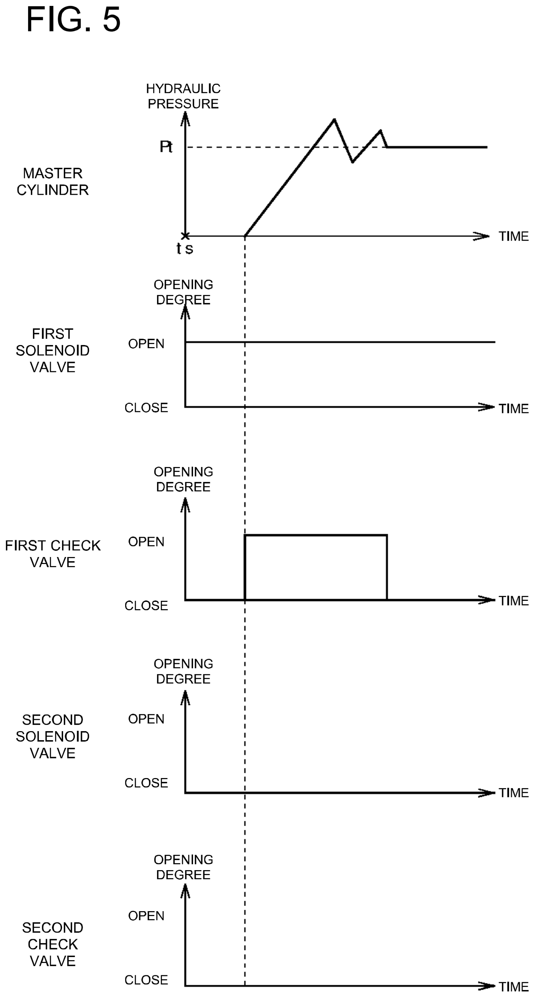

The process of generating the braking pressure in the brake device 13 by the hydraulic fluid supplied from the master cylinder 12 is described in detail. As illustrated in FIG. 5, in the relationship between the hydraulic pressure in the master cylinder 12 and time, the first check valve 71 is opened shortly after a time point ts at which the brake pedal 19 is depressed. The hydraulic fluid from the master cylinder 12 increases the hydraulic pressure in the master cylinder fluid passage, which causes the first check valve 71 to open. Meanwhile, the first solenoid valve 34 remains open, and the second solenoid valve 36 and the second check valve 81 are closed. The hydraulic pressure in the master cylinder 12 begins to increase when the first check valve 71 begins to open and exceeds a target hydraulic pressure Pt. The hydraulic pressure in the master cylinder 12 becomes substantially constant at the target hydraulic pressure Pt after a period of hydraulic pressure adjustment during which the hydraulic pressure in the master cylinder 12 increases or decreases from the target hydraulic pressure Pt. This allows the brake device 13 to obtain the required hydraulic pressure. The first check valve 71 is closed after the period of hydraulic pressure adjustment has elapsed.

When the brake pedal 19 is released, the hydraulic fluid is returned to the master cylinder 12 through the first passage 33 and the pipe 17, without controls of the first solenoid valve 34 and the second solenoid valve 36. Thus, the braking force in the brake device 13 is released. That is, the hydraulic pressure in the brake device 13 decreases, releasing the braking force of the brake device 13. In other words, the hydraulic pressure of the brake device 13 is reduced in accordance with the release amount of the brake pedal 19, resulting in reduced braking force. In addition, excess hydraulic fluid is returned from the master cylinder 12 to the hydraulic fluid tank 11 through the pipe 16.

Next, braking during the automated operation of the forklift truck will be described. When the forklift truck is traveling in the automated operation, a braking force is not generated in the brake device 13, unless the actuator 15 is activated. In the case where braking of the forklift truck is performed during automated operation, the actuator 15 is activated so as to discharge the hydraulic fluid in accordance with the amount of operation of the actuator 15, thereby causing a braking force to be generated in the brake device 13. Thus, in the case of braking during the automated operation, the second solenoid valve 36 opens the second passage 35 and the first solenoid valve 34 closes the first passage 33. The actuator 15 is activated based on the operation command issued by the controller 28, which is issued when the accelerator pedal sensor 94 does not detect the depression of the accelerator pedal 93 or when the obstacle sensor 95 detects an obstacle.

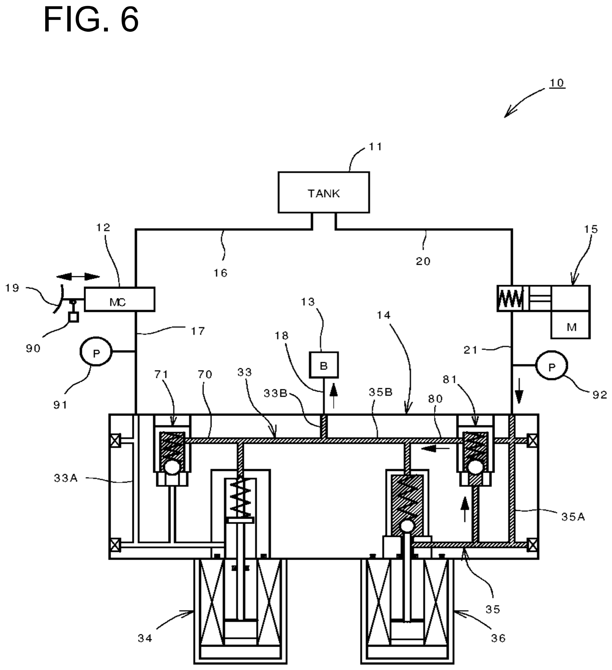

When the accelerator pedal sensor 94 does not detect the depression of the accelerator pedal 93 or when the obstacle sensor 95 detects an obstacle, the controller 28 issues the valve opening command to the second solenoid valve 36 and a valve close command to the first solenoid valve 34 simultaneously with the operation command to the actuator 15. When the actuator 15 is activated, the controller 28 receives the signal indicating the hydraulic pressure in the pipe 21 detected by the second hydraulic pressure sensor 92. The controller 28 feeds back the hydraulic pressure in the pipe 21, detected by the second hydraulic pressure sensor 92, to the electric motor 22 of the actuator 15 to control the torque of the electric motor 22 such that the hydraulic pressure in the pipe 21 reaches the target pressure. The controller 28 causes the first solenoid valve 34 and the second solenoid valve 36 to be energized so that the first solenoid valve 34 is closed and the second solenoid valve 36 is opened. Accordingly, the second check valve 81 is opened immediately after the second solenoid valve 36 begins to open, so that the hydraulic fluid is supplied to the brake device 13. The second solenoid valve 36 is then fully opened after the second check valve 81 is opened. As illustrated in FIG. 6, when the second solenoid valve 36 is fully opened, the hydraulic fluid discharged from the actuator 15 is supplied to the brake device 13 through the pipe 21, the second passage 35, a part of the passage portion 33B, and the pipe 18. In the brake device 13, a braking force is generated by the hydraulic fluid supplied from the actuator 15, and the forklift truck is decelerated or stopped by the braking force in the brake device 13.

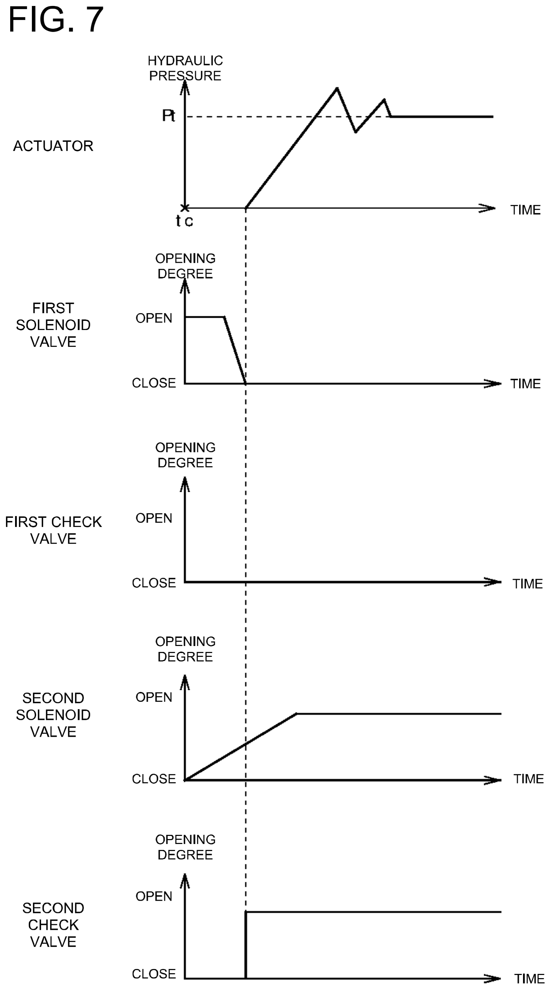

The process of generating the braking pressure in the brake device 13 by the hydraulic fluid supplied from the actuator 15 is described in detail. As illustrated in FIG. 7, in the relationship between the hydraulic pressure in the actuator 15 and time, the second solenoid valve 36 begins to open at a time point tc at which the operation command to the actuator 15 is issued by the controller 28, and the first solenoid valve 34 begins to close after the second solenoid valve 36 begins to open. The hydraulic fluid from the actuator 15 increases the hydraulic pressure in the actuator fluid passage, which causes the second check valve 81 to open. The second check valve 81 is opened when the first solenoid valve 34 is completely closed. The hydraulic pressure in the actuator 15 begins to increase almost simultaneously with the closing of the first solenoid valve 34 and the opening of the second check valve 81, and the second solenoid valve 36 is fully opened while the hydraulic pressure in the actuator 15 is increasing. The hydraulic pressure in the actuator 15 becomes substantially constant at the target hydraulic pressure Pt after a period of hydraulic pressure adjustment during which the hydraulic pressure in the actuator 15 increases or decreases from the target hydraulic pressure Pt. This allows the brake device 13 to obtain the required hydraulic pressure.

When the breaking pressure in the brake device 13 is released by the actuator 15, the piston 26 of the actuator 15 is released while the second solenoid valve 36 remains open. The hydraulic fluid is therefore returned to the actuator 15 through the second passage 35 and the pipe 21, and the braking force in the brake device 13 is released. In other words, the hydraulic pressure of the brake device 13 is reduced in accordance with the release amount of the brake pedal 19, resulting in reduced braking force. In addition, excess hydraulic fluid is returned from the master cylinder 12 to the hydraulic fluid tank 11 through the pipe 16.

The operator may depress the brake pedal 19 while the braking force is being generated in the brake device 13 by the actuator 15 (in other words, while the hydraulic fluid is supplied from the actuator 15 to the brake device 13). In this situation, the controller 28 compares a hydraulic pressure Pm detected by the first hydraulic pressure sensor 91 (i.e., first hydraulic pressure Pm) and a hydraulic pressure Pn detected by the second hydraulic pressure sensor 92 (i.e., second hydraulic pressure Pn). The first hydraulic pressure Pm increases as the depressed amount of the brake pedal 19 decreases. When the first hydraulic pressure Pm is greater than or equal to the second hydraulic pressure Pn, the controller 28 controls so that the first solenoid valve 34 begins to open and the second solenoid valve 36 begins to close.

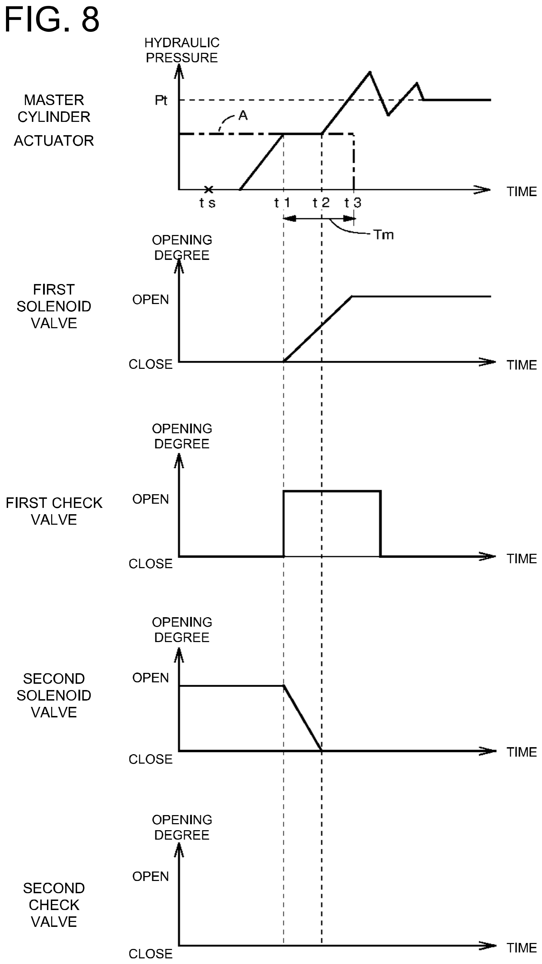

As illustrated in FIG. 8, after the time point ts at which the brake pedal 19 is depressed, the first check valve 71 is opened along with the opening of the first solenoid valve 34 and the closing of the second solenoid valve 36. At approximately the same time point t1, the first solenoid valve 34 begins to open, the second solenoid valve 36 begins to close, and the first check valve 71 begins to open. The second solenoid valve 36 completely closes at a time point t2. At the time point t2, the first solenoid valve 34 is opening. After the second solenoid valve 36 completely closes at the time point t2, the first solenoid valve 34 fully opens at a time point t3. In FIG. 8, for convenience of explanation, the hydraulic pressure in the actuator 15 is indicated by a single dotted line A in the graph showing the hydraulic pressure in the master cylinder 12. The hydraulic pressure in the actuator 15 indicated by the line A is approximately equal to the second hydraulic pressure Pn detected by the second hydraulic pressure sensor 92.

On the other hand, when the first hydraulic pressure Pm is less than the second hydraulic pressure Pn, the supply of the hydraulic fluid from the actuator 15 is maintained with the first solenoid valve 34 closed. For example, although the depression of the brake pedal 19 is detected by the limit switch 90, the brake pedal 19 may be lightly depressed or immediately returned. In this case, the first hydraulic pressure Pm is lower than the second hydraulic pressure Pn, and the hydraulic pressure in the actuator 15 maintains the braking force in the brake device 13. Accordingly, the first solenoid valve 34 is not opened, even if the brake pedal 19 is lightly depressed or immediately returned. This prevents a decrease in the operating pressure of the brake device 13 due to the opening of the first solenoid valve 34.

The second solenoid valve 36 begins to close at the time point t1, and completely closes at the time point t2. In order to cause the actuator 15 to continue to operate between the time point t1 to the time point t2, a set time Tm is set in the controller 28 so that the controller 28 causes the actuator 15 to stop after the set time Tm has elapsed. In the present embodiment, the set time Tm corresponds to a time from the time point t1 to the time point t3 (for example, 50 ms). The set time Tm is preferably set in consideration of a detection error of the first hydraulic pressure sensor 91 or the second hydraulic pressure sensor 92 and changes in viscosity of the hydraulic fluid due to temperature. Setting the set time Tm in the controller 28 prevents the hydraulic pressure in the actuator 15 from decreasing between the time point t1 and the time point t2. This prevents that the braking force decreases due to a decrease in the braking pressure before the hydraulic pressure in the master cylinder 12 reaches the target hydraulic pressure Pt, so that the operator does not feel any discomfort during braking. If the set time Tm for delaying the stop of the actuator 15 is not set, the braking pressure decreases between the time point t1 and the time point t2. Accordingly, the operator may feel discomfort due to a temporary loss of deceleration occurring during braking.

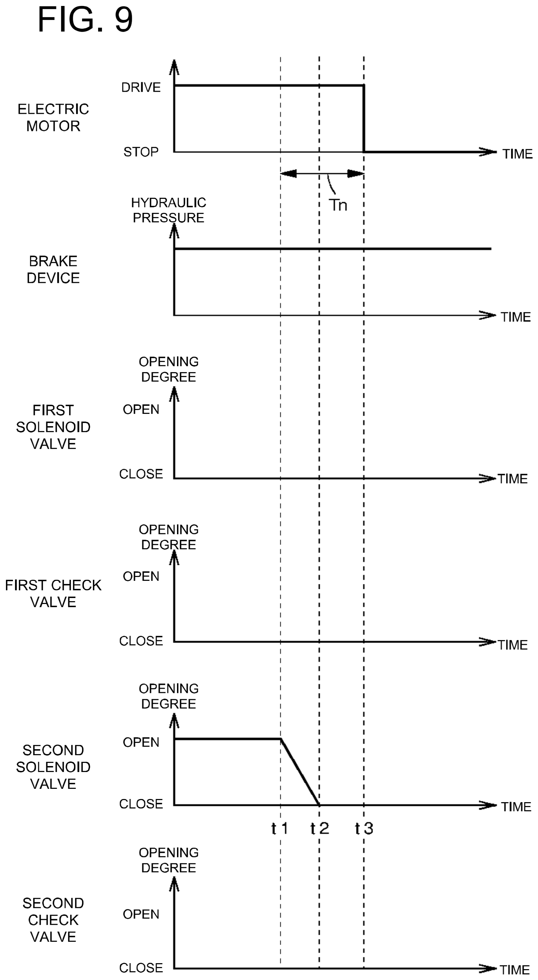

In the present embodiment, the second solenoid valve 36 may be closed during the operation of the actuator 15 to maintain the braking pressure in the brake device 13. Continuously driving the electric motor 22 of the actuator 15 to maintain the braking pressure in the brake device 13 may cause the electric motor 22 to overheat. The electric motor 22 should be stopped when the second solenoid valve 36 is closed during the operation of the actuator 15, but the braking pressure in the brake device 13 decreases even if the electric motor 22 is stopped before the second solenoid valve 36 completely closes. In the present embodiment, as illustrated in FIG. 9, a set time Tn is set in the controller 28 for delaying the stop of the electric motor 22.

As illustrated in FIG. 9, the second solenoid valve 36 begins to close at the time point t1 and completely closes at the time point t2. The electric motor 22 stops when a set time Tn elapses at a time point t3 after the time point t2. The set time Tn is a time determined by adding a specified time to the time from the time point t1 to the time point t2. When the controller 28 controls so that the second solenoid valve 36 closes and the electric motor 22 stops during the operation of the actuator 15, the electric motor 22 stops at the time point t3 after the set time Tn has elapsed from the time point t1 although the second solenoid valve 36 closes. Accordingly, the hydraulic pressure in the brake device 13 does not decrease while the second solenoid valve 36 is closing. The hydraulic pressure in the brake device 13 is approximately equal to the hydraulic pressure in the actuator 15.

The hydraulic brake system 10 according to the present embodiment achieves the following advantageous effects.
(1) When the detection sensor detects that the braking force is required, the controller 28 controls so that the actuator 15 is activated, the first solenoid valve 34 closes, and the second solenoid valve 36 opens. Accordingly, the hydraulic fluid is supplied from the actuator 15 to the brake device 13 so that the braking force is generated in the brake device 13. This allows the braking force to be automatically generated in the brake device 13 when the braking force is required while the forklift truck is traveling. At least one of the accelerator pedal sensor 94 and the obstacle sensor 95 serves as the detection sensor.
(2) When the depression of the brake pedal 19 is detected by the limit switch 90 while the braking force is generated in the brake device 13 by the actuator 15 (i.e., while the hydraulic fluid is supplied from the actuator 15 to the brake device 13), the controller 28 compares the first hydraulic pressure Pm, which is the hydraulic pressure in the master cylinder fluid passage detected by the first hydraulic pressure sensor 91, and the second hydraulic pressure Pn, which is the hydraulic pressure in the actuator fluid passage detected by the second hydraulic pressure sensor 92. When the first hydraulic pressure Pm is greater than or equal to the second hydraulic pressure Pn, the controller 28 controls so that the first solenoid valve 34 opens and the second solenoid valve 36 closes. Accordingly, when the brake pedal 19 is depressed while the braking force is generated in the brake device 13 by the actuator 15, the energy source that generates the braking force in the brake device 13 is switched from the hydraulic pressure in the actuator 15 to the hydraulic pressure in the master cylinder 12. When the first hydraulic pressure Pm is less than the second hydraulic pressure Pn, the controller 28 controls so that the hydraulic fluid is continuously supplied from the actuator 15 to the brake device 13, so that the braking force is generated in the brake device 13 by the actuator 15.
(3) When the brake pedal 19 is depressed and the hydraulic pressure in the master cylinder fluid passage is greater than or equal to the hydraulic pressure in the actuator fluid passage, the controller 28 controls so that the first solenoid valve 34 opens and the second solenoid valve 36 closes. The controller 28 further controls so that the actuator 15 stops after a set time has elapsed since the first solenoid valve 34 opened. The second solenoid valve 36 does not close immediately when the brake pedal 19 is depressed. This prevents the hydraulic pressure in the brake device 13 from temporarily decreasing due to a decrease in the hydraulic pressure in the actuator 15. This therefore allows the operator to obtain an appropriate brake feeling without feeling discomfort when the brake pedal 19 is depressed while the braking force is generated in the brake device 13 by the actuator 15. In particular, the set time Tm is set in the controller 28 so that the controller 28 causes the actuator 15 to stop after the set time Tm has elapsed, in order to cause the actuator 15 to continue to operate between the time point t1 at which the second solenoid valve 36 begins to close and the time point t2 at which the second solenoid valve 36 completely closes. This reliably prevents the hydraulic pressure in the actuator 15 from decreasing between the time point t1 and the time points t2, thus preventing an uncomfortable brake feeling due to a decrease in the hydraulic pressure.
(4) When the controller 28 causes the actuator 15 to stop while the braking force is being generated in the brake device 13 by the actuator 15, the controller 28 controls so that the actuator 15 stops after the second solenoid valve 36 closes. This prevents the braking pressure in the brake device 13 from decreasing, compared to a case where the actuator 15 immediately stops. In particular, according to the present embodiment, the set time Tn is set in the controller 28 so that the stop of the electric motor 22 is delayed. This reliably prevents the braking pressure in the brake device 13 from decreasing.
(5) The first solenoid valve 34 is a normally open solenoid valve and the second solenoid valve 36 is a normally closed solenoid valve. Accordingly, the braking force is generated in the brake device 13 by the depression of the brake pedal 19 even if a power failure occurs while the forklift truck is traveling.

The present invention is not limited to the above-described embodiment, but may be modified in various manners, as exemplified below.

In the above-described embodiment, the accelerator pedal sensor and the obstacle sensor serve as the detection sensor that detects whether the braking force is required while the forklift truck is traveling. However, the detection sensor is not limited to the accelerator pedal sensor and the obstacle sensor. For example, the detection sensor may be a vibration detection sensor that detects abnormal vibration of a vehicle body, or a tilt detection sensor that detects significant tilting of the vehicle body. That is, the type of sensor is not required as long as the sensor can detect whether the braking force is required. Otherwise, for example, if the maximum speed of the forklift truck is determined for each location in a site, an area sensor may serve as the detection sensor and communicate with the controller so that braking is performed when the speed is exceeded. Alternatively, a steering angle sensor may serve as the detection sensor and detect a steering angle of the forklift truck to prevent rollover of the forklift truck due to a sharp turn.

In the above-described embodiment, the controller compares the hydraulic pressure in the master cylinder fluid passage and the hydraulic pressure in the actuator fluid passage when the depression of the brake pedal is detected while the hydraulic fluid is supplied from the actuator to the brake device. However, the application of the present invention is not limited thereto. For example, the controller does not have to compare the hydraulic pressure in the master cylinder fluid passage and the hydraulic pressure in the actuator fluid passage when the depression of the brake pedal is detected while the hydraulic fluid is supplied from the actuator to the brake device.

In the above-described embodiment, when the depression of the brake pedal is detected while the braking force is generated by the actuator and the hydraulic pressure in the master cylinder fluid passage is greater than or equal to the hydraulic pressure in the actuator fluid passage, the controller controls so that the first solenoid valve opens. The actuator stops after the set time has elapsed since the first solenoid valve opened. However, the application of the present invention is not limited thereto. For example, the controller may stop the actuator immediately after the first solenoid valve opens, as long as the hydraulic pressure in the actuator does not decrease.

Although the first solenoid valve is a normally open solenoid valve and the second solenoid valve is a normally closed solenoid valve in the above-described embodiment, the configuration is not limited thereto. For example, the first solenoid valve and the second solenoid valve may be normally closed solenoid valves.

In the above-described embodiment, the second check valve opens simultaneously with the closing of the first solenoid valve while the actuator is operating. However, the application of the present invention is not limited thereto. For example, the valve hole of the first solenoid valve may have a hole diameter that generates a pressure loss, which prevents the hydraulic pressure from escaping to the actuator before the first solenoid valve closes. This allows the second check valve to open before the first solenoid valve closes while the actuator is operating, thereby allowing the hydraulic fluid to be supplied to the brake device. Similarly, the valve hole of the second solenoid valve may have a hole diameter that generates a pressure loss, which prevents the hydraulic pressure from escaping to the master cylinder before the second solenoid valve closes. This allows the first check valve to open before the second solenoid valve closes while the master cylinder is operating, thereby allowing the hydraulic fluid to be supplied to the brake device.

In the above-described embodiment, the hydraulic brake system for the forklift truck as an industrial vehicle is described, but the application of the present invention is not limited to thereto. The industrial vehicle may be, for example, a towing vehicle or a towing tractor, or may be any vehicle equipped with a brake device that can be operated with hydraulic pressure in the master cylinder and the actuator.

## Claims

1. A hydraulic brake system (10) for an industrial vehicle, the hydraulic brake system (10) comprising:
a brake device (13) configured to brake a wheel using hydraulic pressure;
a brake pedal (19);
a master cylinder (12) configured to discharge hydraulic fluid in accordance with a depressed amount of the brake pedal (19) to output the hydraulic pressure; and
a master cylinder fluid passage (17, 33, 18) connecting the master cylinder (12) and the brake device (13), **characterized in that**
the hydraulic brake system (10) includes:
an actuator (15) configured to output the hydraulic pressure;
a control valve (14) disposed in the master cylinder fluid passage (17, 33, 18);
an actuator fluid passage (21, 35) that extends from the actuator (15) to the master cylinder fluid passage (17, 33, 18) through the control valve (14);
a first solenoid valve (34) provided in the control valve (14) and configured to open and close the master cylinder fluid passage (17, 33, 18);
a second solenoid valve (36) provided in the control valve (14) and configured to open and close the actuator fluid passage (21, 35);
a controller (28) configured to control the first solenoid valve (34) and the second solenoid valve (36); and
a detection sensor (94, 95) connected to the controller (28) and configured to detect whether a braking force is required, and
when the detection sensor (94, 95) detects that the braking force is required, the controller (28) controls so that the actuator (15) is activated, the first solenoid valve (34) closes, and the second solenoid valve (36) opens.

2. The hydraulic brake system (10) for the industrial vehicle according to claim 1, further comprising:
a brake pedal sensor (90) configured to detect depression of the brake pedal (19);
a first hydraulic pressure sensor (91) configured to detect the hydraulic pressure in the master cylinder fluid passage (17, 33, 18);
a second hydraulic pressure sensor (92) configured to detect the hydraulic pressure in the actuator fluid passage (21, 35), and
when the depression of the brake pedal (19) is detected by the brake pedal sensor (90) while the hydraulic fluid is supplied from the actuator (15) to the brake device (13),
the controller (28) compares the hydraulic pressure in the master cylinder fluid passage (17, 33, 18) detected by the first hydraulic pressure sensor (91) and the hydraulic pressure in the actuator fluid passage (21, 35) detected by the second hydraulic pressure sensor (92),
when the hydraulic pressure in the master cylinder fluid passage (17, 33, 18) is greater than or equal to the hydraulic pressure in the actuator fluid passage (21, 35), the controller (28) controls so that the first solenoid valve (34) opens, and
when the hydraulic pressure in the master cylinder fluid passage (17, 33, 18) is less than the hydraulic pressure in the actuator fluid passage (21, 35), the controller (28) controls so that the hydraulic fluid is continuously supplied from the actuator (15) to the brake device (13).

3. The hydraulic brake system (10) for the industrial vehicle according to claim 2, **characterized in that**
the controller (28) controls so that the actuator (15) stops after a set time (Tm) has elapsed since the first solenoid valve (34) opened.

4. The hydraulic brake system (10) for the industrial vehicle according to claim 1 or 2, **characterized in that**
when the controller (28) causes the actuator (15) to stop while the braking force is being generated in the brake device (13) by the actuator (15), the controller (28) controls so that the actuator (15) stops after the second solenoid valve (36) closes.
